# DEMANDE DE BREVET EUROPEEN

(11) **EP 0 862 067 A1**
(43) Date de publication de la demande: **02.09.1998**
(21) Numéro de dépôt: 98410020.6
(22) Date de dépôt: 27.02.1998
(51) Int. Cl.: G01V 3/10

(54) **Dispositif et méthode de détection, d'indentification et de tri d'emballages métalliques ou comprenant une partie métallique**

(30) Priorité: 28.02.1997 FR 9702641
(71) Demandeur: Laboratoires d'Electronique Angelidis et Sarrault, 38330 Saint Ismier (FR)
(72) Inventeur: Guillermet, Robert, 38140 Rives (FR); Angelidis, Jean François, 38330 Saint Ismier (FR); Ribes, José, 38100 Grenoble (FR)
(74) Mandataire: Hecké, Gérard

(57) **Abrégé**

Le dispositif comprend un moyen d'émission 4 comprenant un signal émis constitué par un champ magnétique d'une fréquence prédéterminée, et un moyen de réception 5 d'un signal reçu, constitué par le champ magnétique induit. Un moyen de mesure et d'enregistrement 6 du déphasage DPm entre ledit signal émis et ledit signal reçu coopère avec un moyen d'enregistrement et de stockage 7 d'une information relative à une table de correspondance entre la nature dudit emballage Ei et ledit déphasage DPi correspondant. La mesure de l'amplitude du champ induit quand l'emballage parcourt une distance L permet d'obtenir une courbe d'amplitude maximum pour un emballage donné, ces courbes et les valeurs d'amplitude maximum étant aussi stockés dans des registres 7 pour servir comme moyen complémentaire d'identification. Un moyen de comparaison 8 permet ensuite une identification dudit emballage en fonction de la nature et de l'épaisseur dudit emballage.

## Description

### DOMAINE DE L'INVENTION

L'invention concerne les dispositifs et méthodes de détection, d'identification et de tri d'emballages métalliques, utilisés notamment pour l'extraction et le recyclage des emballages métalliques, ou comprenant une partie métallique.

### ETAT DE LA TECHNIQUE

On connaît déjà des dispositifs pour séparer les emballages ferreux des non-ferreux à l'aide d'aimants, ou pour séparer les emballages métalliques non-ferreux, typiquement ceux en aluminium, d'autres emballages non-métalliques, notamment grâce à des machines tournantes à courant de Foucault.
Ces machines sont utilisées notamment pour séparer les boîtes boisson en acier de celles en aluminium, Elles sont constituées d'un tambour portant des pôles nord-sud (N-S) alternés. La rotation du tambour crée un champ magnétique variable, et donc un courant induit en opposition de phase dans le déchet ou emballage métallique à trier / récupérer : il en résulte une attraction des boîtes en acier et une répulsion des boîtes en aluminium, les autres matériaux non-métalliques éventuellement présents ne subissant aucune modification de leur trajectoire balistique.

On connaît aussi des machines statiques à courant de Foucault. Ces machines sont destinées à détecter, typiquement dans l'industrie du bois, la présence de pièce métallique, généralement en fer, dans les pièces de bois à travailler, pour les écarter éventuellement et protéger ainsi les outils de travail du bois. On utilise aussi ces machines dans l'industrie agro-alimentaire pour détecter la présence accidentelle de tout pièce métallique dans des produits alimentaires.

Ces machines comprennent un capteur constitué d'un émetteur de champ magnétique fixe, et d'un détecteur analysant en amplitude le champ magnétique, émis par le courant induit dans ladite pièce métallique se déplaçant devant l'émetteur.

### PROBLEME POSE

Le problème du recyclage ou de la valorisation des emballages et des matériaux contenus dans les déchets, notamment les déchets ménagers, est un problème majeur de grande actualité pour la société de consommation d'aujourd'hui. On connaît différentes manières de traiter à ce jour ce problème ; en schématisant, on peut distinguer deux approches opposées :
- la première consiste à effectuer à la source le tri des déchets et emballages à traiter, avant leur collecte (ramassage), le consommateur séparant lui-même manuellement les emballages métalliques, plastiques, papier, verre, etc...
   Les emballages métalliques étant eux-mêmes triés selon qu'il s'agit de matériaux ferreux ou non-ferreux (principalement l'aluminium), tous ces matériaux triés peuvent être recyclés et valorisés en tant que matériaux.
- la seconde approche consiste à limiter et simplifier la part de tri avant collecte, l'ensemble des déchets et emballages étant traités en usine de traitement des déchets et ordures ménagères, le tri avant collecte étant éventuellement limité à un tri entre emballages et produits putrescibles.
   Dans cette seconde approche, il peut certes y avoir un tri effectué en usine pour des raisons techniques - par exemple, il se peut qu'il soit nécessaire d'éliminer le verre - mais l'optique majeure est l'incinération de ces déchets et donc d'abord la récupération du contenu énergétique des matériaux eux-mêmes, les produits non combustibles ou dont les produits de combustion sont des solides, typiquement les métaux, formant des mâchefers et résidus solides, qui doivent être à leur tour traités si l'on veut récupérer les métaux contenus dans ces mâchefers et résidus.

Chaque approche pose ses propres problèmes, la première parce qu'elle met à contribution chaque consommateur par le tri qu'il effectue, et qu'elle met donc en jeu une collecte d'une grande lourdeur à partir de chaque ensemble de bacs de collecte, chaque consommateur devant avoir à portée dc main autant de bacs de collecte que de types de matériau à trier.
La seconde approche, qui ne met pas directement le consommateur à contribution et qui s'appuie essentiellement sur des moyens industriels, est essentiellement une revalorisation énergétique, qui n'exploite que partiellement la valeur intrinsèque des matériaux, et qui ne résout pas pour autant les problèmes des résidus ou sous-produits des usines d'incinération (traitement des fumées, des cendres, des mâchefers, etc...).

Il y aurait un grand intérêt à cumuler les avantages ou éviter les inconvénients de chacune de ces deux approches. c'est à dire schématiquement à effectuer une collecte non sélective des emballages et un tri des emballages en usine afin de pouvoir recycler d'abord des matériaux, traiter éventuellement des matériaux complexes pour récupérer des matériaux simples, et ne valoriser sous forme énergétique que ce qui ne serait pas valorisable autrement de manière économique.

L'invention vise à offrir une solution partielle à ce problème en offrant un dispositif et un procédé pour détecter les emballages comprenant un métal qui peut être visible ou non visible comme, par exemple, dans le cas d'un matériau multicouches comprenant intérieurement une feuille mince d'aluminium, pour les identifier, les discriminer, les comptabiliser et/ou pour les trier par type d'emballage d'un métal donné.

### DESCRIPTION DE L'INVENTION

Selon l'invention, le dispositif de détection et d'identification au défilé d'emballages ou de déchets comprenant au moins une partie métallique et circulant selon une voie prédéterminée, comprend un moyen de génération ou d'émission d'un signal dit « émis » constitué par un champ magnétique d'une fréquence prédéterminée, et un moyen correspondant de réception et d'analyse complexe d'un signal dit « reçu », de même fréquence, constitué par le champ magnétique induit et modifié dans ledit métal lors dudit défilé devant lesdits moyens, et est caractérisé en ce qu'il comprend :
a) un moyen d'analyse impédancemétrique, en particulier un moyen de mesure et d'enregistrement d'une différence de phase ou déphasage DPₘ entre ledit signal émis et ledit signal reçu au passage d'un emballage Eₓ à identifier,
b) un moyen d'enregistrement et de stockage d'une information relative à une table de corrélation ou de correspondance entre la nature dudit emballage Eᵢ et ledit déphasage DPᵢ correspondant,
c) un moyen de comparaison dudit déphasage mesuré DPₘ aux valeurs de déphasage contenues dans ladite table de correspondance entre le déphasage DPᵢ et l'emballage Eᵢ, et ainsi un moyen d'identification dudit emballage Eₓ comme étant un emballage Eⱼ,
d) un moyen de tri dudit emballage Eⱼ précédemment identifié.

Selon l'invention, la nature dudit emballage est définie par la nature et par l'épaisseur dudit métal. Ce sont là les deux éléments qui ont été trouvés déterminants, en ce sens que des emballages comprenant une couche d'un même métal et avec la même épaisseur, présenteront sensiblement un même déphasage.
L'invention repose donc sur la constatation surprenante, effectuée par la demanderesse dans le cadre de ses travaux sur les courants de Foucault dans les emballages comprenant un métal et de l'analyse combinée des signaux émis et reçu, selon laquelle il y a une corrélation directe entre un emballage défini par la nature et l'épaisseur de son métal, et le déphasage du champ magnétique induit par rapport au champ magnétique émis (champ magnétique excitateur).
Ainsi, selon l'invention, à un emballage donné caractérisé par la nature et l'épaisseur de son métal peut correspondre une « signature » magnétique unique définie par le déphasage du champ magnétique induit.

En outre, la demanderesse a constaté avec surprise que cette « signature » ne dépendait principalement que de la nature et de l'épaisseur du métal et assez peu des conditions pratiques de détection ou de l'état dans lequel se trouvent les emballages au moment de la détection :
- en ce qui concerne l'état des emballages, ceux-ci peuvent être plus ou moins froissés, repliés sur eux-mêmes, ou compressés, cela ne change pas la « signature » de l'emballage,
- en ce qui concerne les conditions pratiques de détection, il n'y a pas non plus d'exigences particulières relatives au défilé des emballages devant le dispositif selon l'invention. Ces emballages peuvent être dans n'importe quelle position. Ils n'ont pas à être immobilisés et peuvent rouler ou zigzaguer en passant devant le dispositif de détection. Ils peuvent défiler devant le dispositif selon l'invention à plus de 10 m/s.
   Les seules contraintes, par ailleurs évidentes en elles-mêmes, résident d'une part dans le fait que les emballages à détecter et trier doivent être distincts, de manière à ce que les emballages égrenés soient détectés et triés à la queue leu leu, comme une succession d'objets distincts, et d'autre part dans le fait que ces emballages doivent passer à une certaine distance, pas trop éloignée, des moyens d'émission et de réception dudit dispositif, comme cela sera précisé par la suite.
   Le dispositif selon l'invention présente donc toutes les caractéristiques permettant son utilisation industrielle : séparation à grande vitesse des emballages en fonction de la nature et de l'épaisseur de la couche ou de la paroi métallique de l'emballage, et cela sans contraintes quelconques, hormis celles, évidentes, évoquées ci-avant.

### DESCRIPTION DES FIGURES

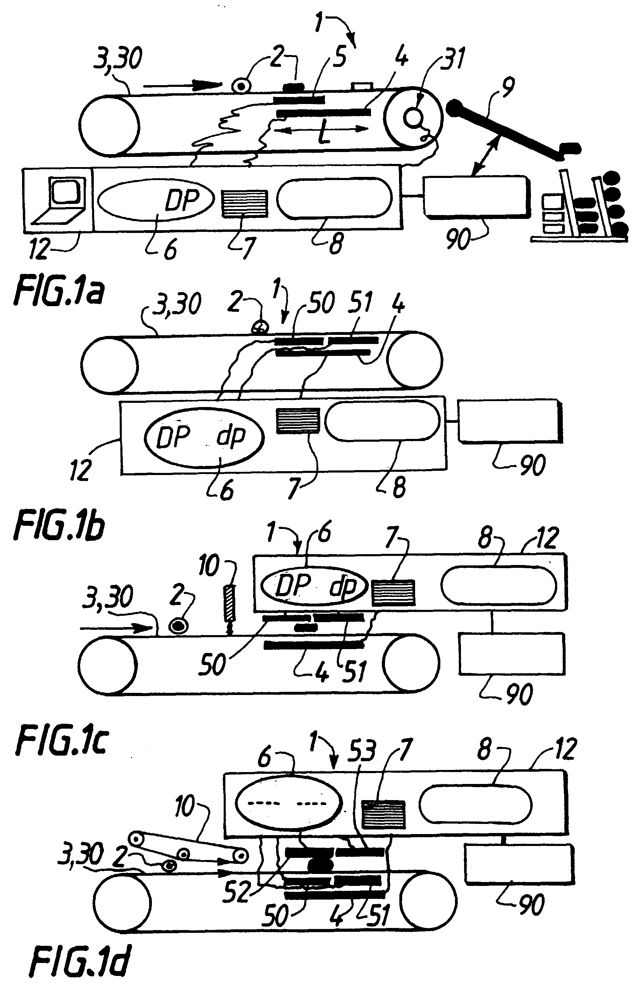

Les figures 1a à 1d illustrent, en coupe longitudinale, quatre modalités de dispositifs (1) selon l'invention, qui utilisent une bande de convoyage (30) comme voie de défilement (3) pour les emballages (2) à détecter et identifier. Cette bande de convoyage débouche sur un moyen de tri (9), représenté seulement sur la figure 1a, qui est activé par un actionneur (90).
Le dispositif (1) comprend toujours :
- un moyen d'émission (4) d'un signal dit « émis », sur une longueur « L » prise dans le sens de défilement de la bande de convoyage (30),
- un moyen de réception (5) d'un signal dit « reçu »,
- un moyen de mesure et d'enregistrement (6) du déphasage mesuré DPₘ entre signaux « émis » et « reçu », correspondant à un emballage Eₓ,
- un moyen d'enregistrement et de stockage (7) de la correspondance entre la nature de l'emballage et le déphasage DP correspondant, c'est à dire une table de correspondance DPᵢ <=> Eᵢ,
- un moyen de comparaison (8) entre le déphasage mesuré DPₘ et la table de correspondance DPᵢ <=> Eᵢ pour identifier l'emballage Eₓ comme étant un emballage Eⱼ. On a regroupé sous le vocable « moyens informatiques » (12) l'ensemble des moyens (6), (7) et (8) qui font appel à un enregistrement d'une information. Ces moyens informatiques comprennent aussi un interface avec l'utilisateur (schématisé sur la figure la par un clavier et un moniteur d'ordinateur) et les logiciels de traitement des ces informations.

La modalité selon la figure 1a comprend un seul capteur (5), alors que deux capteurs de sensibilités différentes (50,51) sont présents dans les modalités selon les figures 1b et 1c, et alors que quatre capteurs (50,51,52,53), deux (50), de sensibilités différentes sont présents sur la figure 1d.
Les modalités selon les figures 1c et 1d comprennent un moyen (10) assurant le défilé des emballages (2) à une distance donnée desdits moyens d'émission (4) et de réception (5), ce moyen (10) étant un calibre à la figure 1c, et étant une bande auxiliaire à la figure 1d.

Les figures 2a à 2c illustrent la modalité de dispositif de la figure 1b.
La figure 2a est une vue en coupe longitudinale, montrant la disposition des moyens d'émission (4) et des deux moyens de réception (50) et (51), et de moyens de repérage (13), disposés sur toute la largeur 1 de ladite bande (30) - moyens de repérage (13), optionnels, qui n'ont pas été représentés sur les figures 1a à 1d pour ne pas surcharger les figures.
La figure 2b est une vue de dessus de l'ensemble de ces moyens (4), (50), (51) et (13), la largeur 1 correspondant sensiblement à la largeur de ladite bande (30), la longueur L correspondant à la distance, dans le sens longitudinal de ladite bande (30), sur laquelle s'opère ladite détection et identification.
La figure 2c représente en coupe longitudinale l'intensité du champ magnétique émis par le moyen d'émission (4), intensité variable sur la distance L, de manière symétrique par rapport à la demi-distance L/2.

Les figures 3a à 3d représentent schématiquement des signaux périodiques de champ magnétique de fréquence prédéterminée (1/T), « T » désignant la période. A la figure 3a correspond le signal émis par ledit moyen d'émission (4).
A la figure 3b correspond, en superposition au signal émis de la figure 3a, le signal reçu en l'absence de tout emballage par ledit moyen de réception (5).
A la figure 3c correspond, en superposition au signal émis de la figure 3a, le signal reçu avec un emballage multicouches Eᵢ à base d'aluminium à 8 µm (briques de lait) présentant un déphasage (déphasage maximum) DPᵢ de 120°.
A la figure 3d correspond, en superposition au signal émis de la figure 3a, le signal reçu avec un emballage Eⱼ à base d'aluminium à 200 µm (boîtes boisson) présentant un déphasage DPⱼ de 170°.

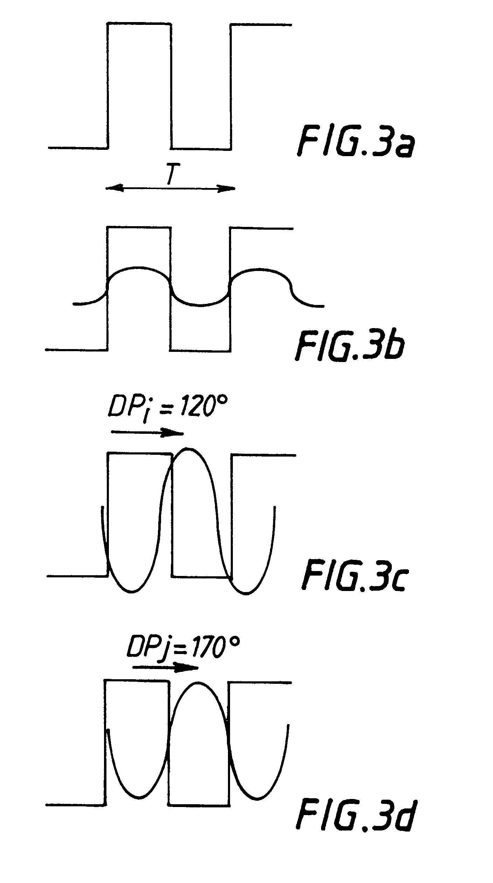

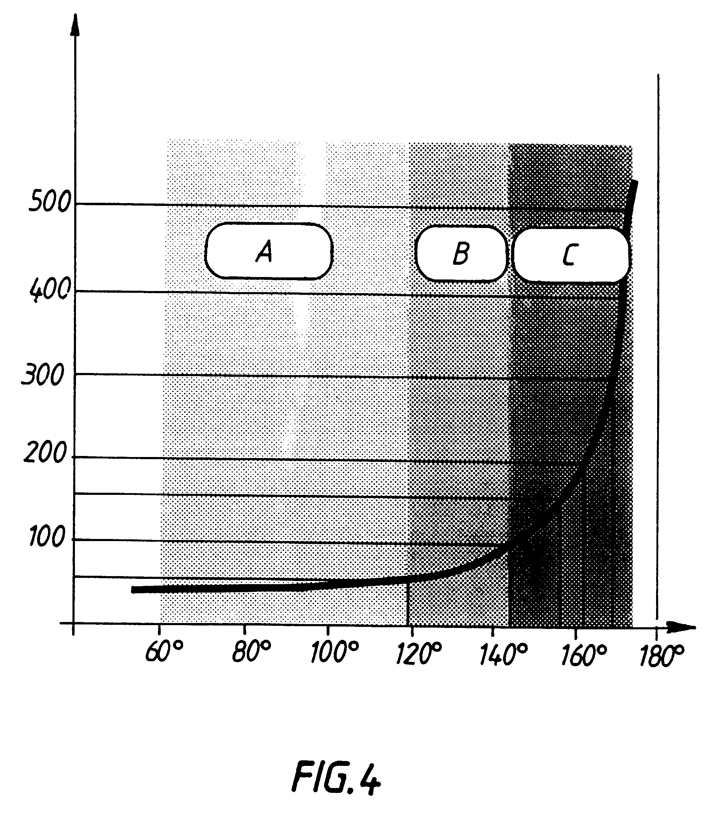

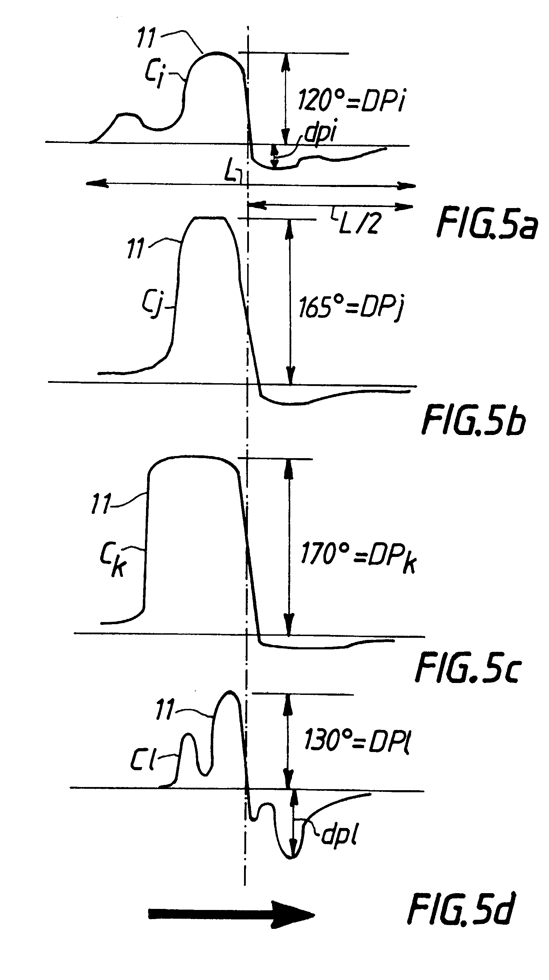

La figure 4 représente un diagramme portant en abscisse le déphasage exprimé en degrés, et en ordonnée l'épaisseur correspondante d'aluminium dans un emballage exprimée en micromètres (µm), et cela pour un moyen d'émission (4) de champ magnétique de fréquence égale à 16 kHz.
A titre indicatif, il a été distingué sur ce diagramme trois domaines notés « A », « B » et « C », le domaine « A » correspondant à des emballages ayant une épaisseur d'aluminium inférieure à 50 µm, le domaine « B » correspondant à des emballages ayant une épaisseur d'aluminium comprise entre 50 et 100 µm, le domaine « C » correspondant à des emballages ayant une épaisseur d'aluminium supérieure 100 µm.
Chacun de ces domaines pourrait correspondre à un type de tri et de valorisation particulière, les emballages du domaine « A » pouvant par exemple être valorisés par leur contenu énergétique, ceux du domaine « B » pouvant être traités pour récupérer l'aluminium, et ceux de domaine « C » pouvant être directement recyclés pour récupérer l'aluminium.

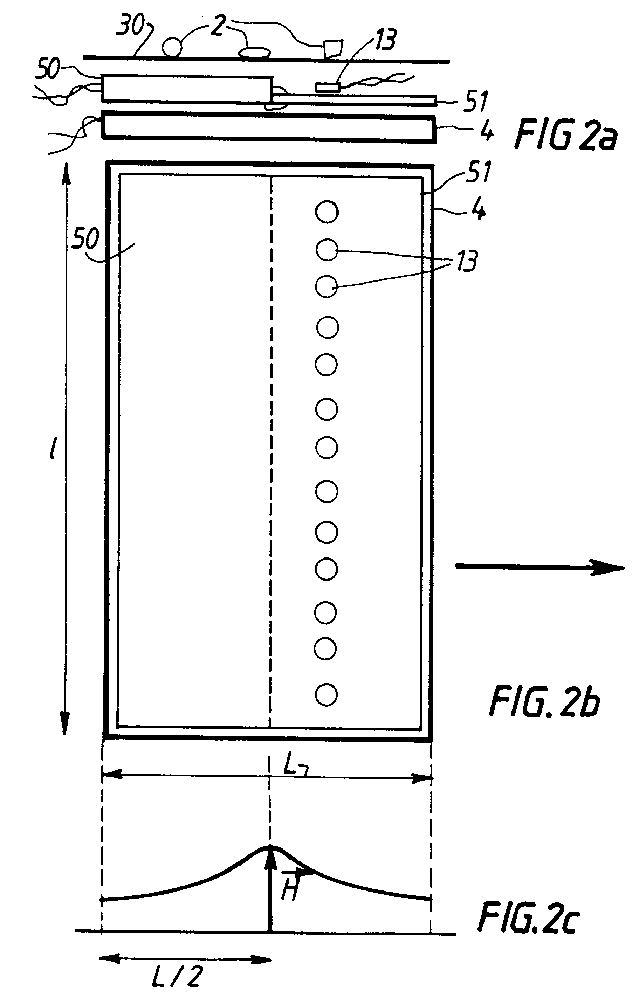

Les figures 5a à 5d correspondent à des exemples de différentes courbes (11) de déphasage DP, dans le cas d'un dispositiftel que celui des figures 2a à 2c, muni de deux moyens (50) et (51) de réception, et muni d'un moyen d'émission (4) à champ magnétique variable.
Le premier capteur (50) agissant sur la première moitié de la distance L/2 - voir direction de la flèche - permet notamment la mesure du déphasage « principal », noté « DP », et fournit en outre une allure de courbe, alors que le second capteur, de sensibilité différente, fournit une autre courbe d'allure différente et une mesure du déphasage « secondaire » noté « dp ». Ces deux courbes, raccordées informatiquement notamment pour faciliter la comparaison des courbes, forment une courbe C (11). La figure 5a représente une courbe Cᵢ correspondant à un film multicouches Eᵢ à base d'aluminium à 8 µm (briques de lait) et présente un déphasage DPᵢ de 120°. La figure 5b représente une courbe Cⱼ correspondant à une boîte boisson en aluminium Eⱼ (épaisseur 200µm) et présente un déphasage DPⱼ de 165°.
La figure 5c représente une courbe Cₖ correspondant à un aérosol en aluminium Eₖ (épaisseur 250µm) et présente un déphasage DPₖ de 170°.
La figure 5d représente une courbe Cₗ correspondant à une boîte boisson en acier Eₗ (épaisseur 160µm) et présente un déphasage DPₗ de 130°.
A noter que les indices (de i à l) utilisés dans cette série de figures ne sont pas à comparer aux indices (i et j) utilisés aux figures 3c et 3d.

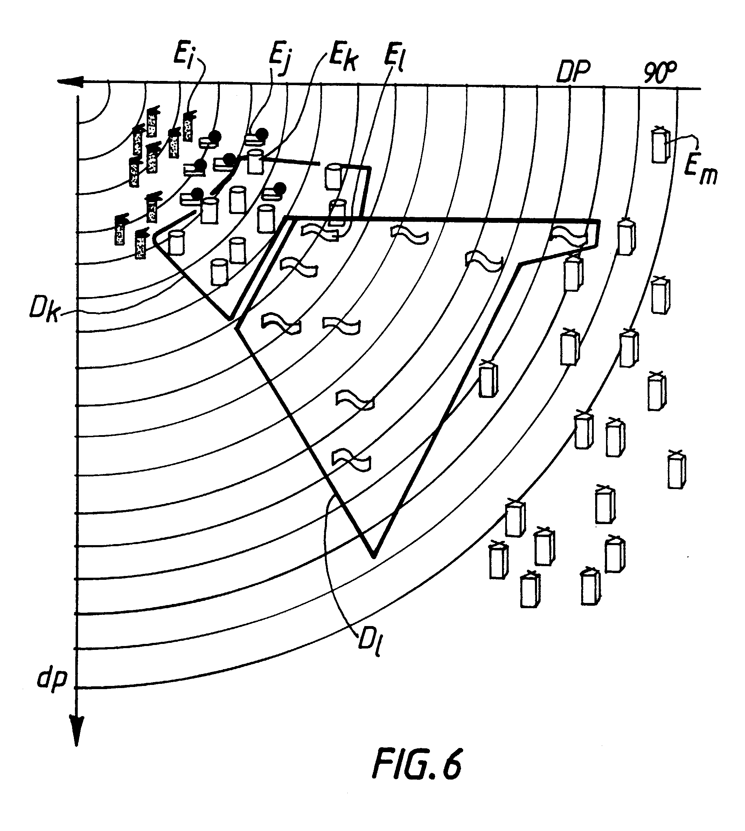

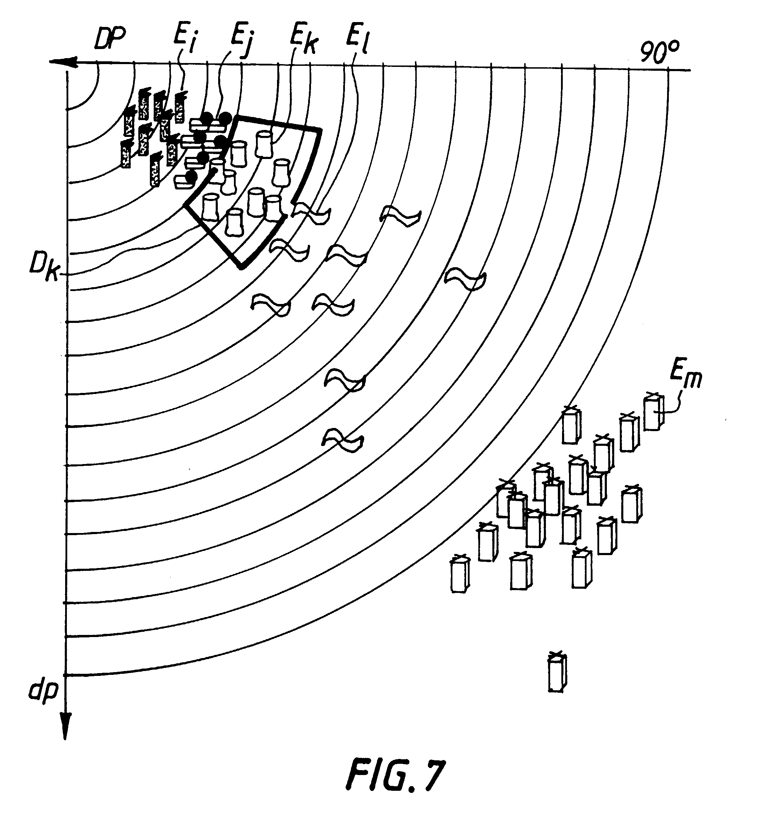

Les figures 6 et 7 représentent des diagrammes ayant en abscisse le déphasage principal DP (en degrés - sur un axe orienté vers la gauche et partant de la valeur de 90°), et en ordonnée le déphasage secondaire dp, sur lesquels sont figurés différents types d'emballages représentés par des symboles et notés de Eᵢ à Eₘ, avec :
Eᵢ = aérosol aluminium d'épaisseur 250 µm,
Eⱼ = boîte conserve aluminium d'épaisseur 230 µm,
Eₖ = boîte boisson aluminium d'épaisseur 200 µm,
Eₗ = emballage flexible avec aluminium (épaisseur de 20 à 100 µm environ),
Eₘ = film multicouches avec aluminium à 8 µm (brique),
les présents indices (i à m) ne sont pas à comparer aux indices utilisés sur les figures précédentes.

A une même représentation symbolique, sur ces diagrammes, correspond un emballage de même nature, mais non identique, ces diagrammes n'étant pas destinés à établir la précision intrinsèque du dispositif selon l'invention, mais à établir le pouvoir de tri, compte tenu de la grande diversité des emballages et des épaisseurs de métal rencontrée dans la pratique.

La figure 6 correspond au dispositif schématisé à la figure 1b, alors que la figure 7 correspond au dispositif schématisé à la figure 1c dans lequel les emballages sont maintenus à une distance constante - ici inférieure à 6 cm - des moyens d'émission (4) et de réception (5). On peut observer, en comparant les populations des figures 6 et 7, un resserrement de la dispersion, sur les deux mesures de déphasage DP et dp, mais principalement sur la mesure du déphasage secondaire dp.
La figure 7 montre donc, que, quelle que soit la diversité des emballages, même au sein d'une même famille d'emballages, il est possible de distinguer les emballages d'une famille avec ceux d'une autre famille.

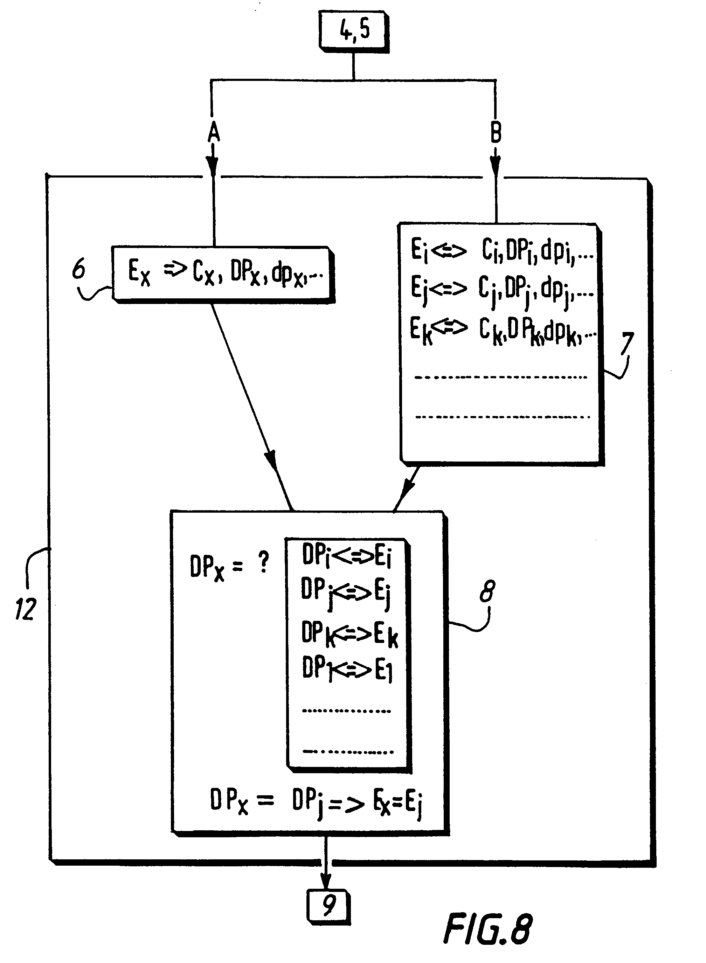

La figure 8 illustre un exemple de fonctionnement des moyens informatiques (12) utilisés dans le dispositif selon l'invention. Ces moyens comprennent :
- un moyen (6) d'enregistrement et de mesure du déphasage de tout emballage à identifier, alimenté par la voie « A » depuis les moyens d'émission (4) et de réception (5),
- un moyen (7) d'enregistrement et de stockage d'une table de correspondance entre emballages connus et les caractéristiques correspondantes de déphasage (C, DP, dp, etc...), alimenté par la voie « B » à partir d'emballages connus, depuis les mêmes moyens d'émission (4) et de réception (5),
- un moyen de comparaison (8), schématisé par un pointeur, mais qui peut être tout critère pertinent, aboutissant à une conclusion (ici : Eₓ = Eⱼ ), transmise au moyen de tri (9).

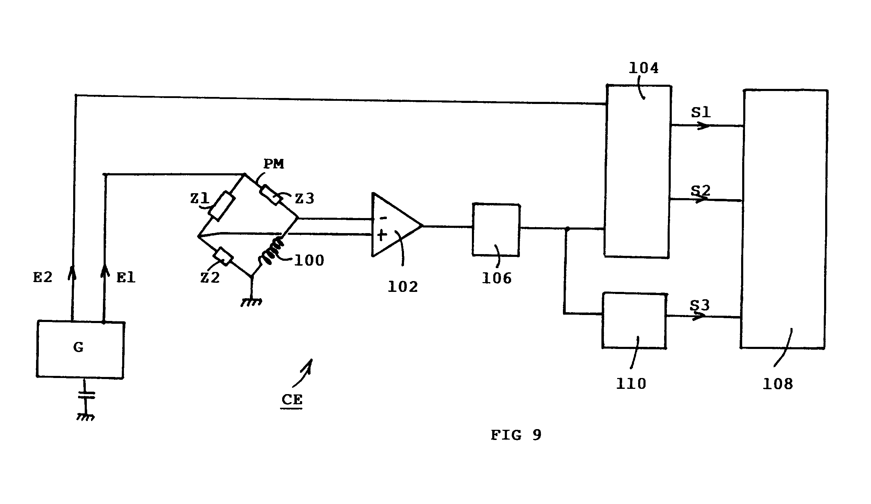

La figure 9 est une vue schématique du circuit électronique.

### DESCRIPTION DETAILLEE DE L'INVENTION

Selon l'invention, ladite fréquence prédéterminée est, de préférence, la fréquence à laquelle la variation dudit déphasage est la plus grande pour une plage donnée d'épaisseurs de métal. Il est possible d'opter, selon le degré de discrimination souhaité, entre plusieurs fréquences possibles
Dans le cas des emballages usuels comprenant de l'aluminium, et pour une plage d'épaisseurs variant typiquement de 5 à 350 µm, ladite fréquence est, de préférence, de 16 kHz +/- 2 kHz. Toutefois. le choix d'autres fréquences pour discriminer d'autres emballages ne sort pas du cadre général de la présente invention.
A cette fréquence, on observe ainsi typiquement un déphasage de 50° entre un emballage ayant 50 µm d'aluminium et un emballage ayant 300 µm d'aluminium - voir figure 4.

Ainsi. sans sortir du cadre de la présente invention, la demanderesse a constaté qu'avec une fréquence plus basse, on a un meilleur pouvoir de séparation des emballages rigides (emballages à épaisseur de métal allant typiquement de 0,15 à 0,35 mm), alors qu'avec une fréquence plus élevée, on a un meilleur pouvoir séparateur des emballages flexibles (emballages à épaisseur de métal allant typiquement de 0,07 à 0,1 mm).

Il est avantageux que ledit moyen d'émission (4) et ledit moyen de réception (5) présentent une activité, de préférence, identique sur toute la largeur « 1 » de ladite voie (3), de manière à ce que ledit signal émis et ledit signal reçu soient indépendants de la position transversale dudit emballage (2) sur ladite voie (3).
Ainsi, même si ledit emballage n'est pas stable sur ladite voie (3) et éventuellement zigzague dans un sens ou dans l'autre, il n'y aura pas d'altération dudit signal reçu.
Cette largeur «1» de ladite voie est, de préférence, comprise entre 0,1 et 2 m, ces valeurs n'étant pas des limites liées audit dispositif selon l'invention, mais seulement liées aux dimensions des équipements industriels usuels, notamment la largeur d'équipements de convoyage au défilé.

Selon l'invention, ledit moyen d'émission (4) peut former un champ magnétique, constant ou variable dans le sens longitudinal sur une longueur « L » le long de ladite voie (3), longueur « L » choisie en relation avec la vitesse de défilement desdits emballages (2), de manière à ce que le temps de séjour desdits emballages (2) en regard desdits moyens d'émission (4) et de réception (5) dudit dispositif (1) soit nettement inférieur à la seconde. Ce temps de séjour est typiquement de l'ordre de 50 ms, pour des moyens d'émission (4) et de réception (5) ayant une longueur « L » de 500 mm et fonctionnant à 16 kHz, et pour un emballage défilant à 10 m/s, ce qui autorise la possibilité d'effectuer 800 points de mesures (16 000x 50.10⁻³) durant ledit temps de séjour.

Selon une forme simplifiée dudit dispositif, le champ magnétique est constant, mais il peut être avantageux d'avoir un champ magnétique variable selon sur la longueur « L », comme illustré à la figure 2c, ce qui permet d'obtenir des courbes C (11) de déphasage selon la position de l'emballage sur ladite longueur « L », de manière à obtenir une information plus riche et ainsi à augmenter les possibilités de discrimination entre emballages.

Le dispositif selon l'invention autorise une vitesse de défilement des emballages qui peut être comprise entre 1 et 15 m/s, ladite longueur « L » correspondante minimum doit alors être comprise entre 30 et 450 mm, compte tenu du temps de mesure au moins égal à 30 ms, ce qui permet d'obtenir 480 points de mesure - nombre le plus souvent suffisant pour obtenir une réponse fiable et reproductible.

L'invention permet une grande diversité de modes de réalisation pratique, comme illustré aux figures 1a à 1d.
Ainsi, comme illustré aux figures 1a et 1b, ledit moyen d'émission (4) et ledit moyen correspondant de réception (5) peuvent être situés d'un même côté de ladite voie (3) et fonctionnent en réflexion.
On bien, comme illustré à la figure 1c, ledit moyen d'émission (4) et ledit moyen correspondant de réception (5) peuvent être situés de part et d'autre de ladite voie (3) et fonctionnent en transmission.
La figure 1d représente une configuration regroupant ces deux modalités.

Selon l'invention, ladite voie (3) peut être une bande de convoyage (30) non armée, typiquement en caoutchouc ou en matière plastique. Il s'agit là d'un mode très fréquent de convoyage de déchets dans les usines de traitement des déchets d'emballages. Mais l'invention n'est pas limitée à un mode particulier de convoyage. L'invention peut même, compte tenu du temps, relativement court, nécessaire pour mesurer le déphasage, être utilisée pour identifier et trier des emballages glissant sur un plan incliné ou tombant en chute libre, par exemple à l'intérieur d'une gaine en matériau transparent au champ magnétique, et typiquement en matière plastique.

Il a été trouvé avantageux que le dispositif selon l'invention soit muni d'un moyen (10) assurant ledit défilé d'emballages à une distance desdits moyens d'émission et de réception qui soit constante et inférieure à une distance prédéterminée, de préférence inférieure à 6 cm. Les figures 1c et 1d schématisent deux modalités qui permettent d'atteindre ce but. En particulier le dispositif de la figure 1d peut permettre la compression partielle d'emballages quelconques pour obtenir un emballage n'ayant pas plus de 6 cm d'« épaisseur ».
Pour une distance supérieure à 12 cm, seul le passage dudit emballage (2) est détecté, alors qu'entre 6 et 12 cm, le dispositifpermet d'opérer la discrimination entre emballages souples (épaisseur d'aluminium typiquement inférieure à 120 µm) et emballages rigides (épaisseur d'aluminium typiquement supérieure à 120 µm).
Ainsi, il a été observé que ce moyen complémentaire (10) peut contribuer à diminuer la dispersion des mesures de déphasage, selon d'ailleurs la sensibilité dudit moyen de réception, comme cela apparaît en comparant les figures 6 et 7, les résultats de la figure 7 étant obtenus avec un dispositifmuni d'un moyen (10) assurant une distance de mesure constante et inférieure à 6 cm.
Sur la figure 6, qui donne, pour différents emballages E_{i à m} et pour un certain nombre de chacun d'entre eux, le double déphasage (DPᵢ et dpᵢ) mesuré avec un dispositif ayant deux dits moyens de réception (50,51) de sensibilité différente, on peut observer, au moins pour certains emballages, par exemple les emballages Eᵢ et Eₘ, une dispersion relativement grande des valeurs, avec une dispersion plus grande selon l'axe « dp » que selon l'axe « DP ».
Par contre, sur la figure 7, on peut observer en général un resserrement des valeurs des deux déphasages DP (par exemple, resserrement de Eⱼ et Eₖ) et dp (par exemple, resserrement de Eᵢ et de Eₘ), ce qui permet une discrimination des emballages E_{i à m} avec une quasi certitude, les nuages de « points » correspondant à chaque population d'emballages étant quasiment distincts dans la figure 7, alors qu'on peut observer parfois quelque chevauchement partiel de ces même nuages sur la figure 6.

Le dispositif selon l'invention peut comprendre plusieurs capteurs (50,51,52,53) disposés à la suite sur toute la longueur L, et/ou de part et d'autre de ladite voie (3), et formant ledit moyen de réception (5).
Sur la figure 1d, on a représenté une modalité à 4 capteurs, les capteurs (50) et (51) étant disposés à la suite sur toute la longueur L d'une côté de ladite voie (3), tandis que les capteurs (52) et (53) sont disposés à la suite sur toute la longueur L de l'autre côté de ladite voie (3).
Typiquement, ledit moyen de réception (5) comprend 2 capteurs de sensibilité différente (50) et (51), ou encore (52) et (53), chacun s'étendant, de préférence, sur une longueur égale à L/2.
L'intérêt d'utiliser plusieurs capteurs de sensibilité différente vient du fait que le dispositif selon l'invention vise la détection et le tri de toute la gamme d'emballages comprenant une partie métallique, ce qui correspond à une large plage d'épaisseur de métal (de quelques µm à quelques centaines de µm), et à différents métaux. Or, un capteur ne peut avoir la même sensibilité pour l'ensemble du domaine sur lequel peut porter la détection. Il est donc préférable d'avoir plusieurs capteurs de sensibilité différente lorsque les emballages à identifier et trier couvrent l'ensemble du domaine possible des épaisseurs et des types de métaux.

Selon une modalité avantageuse de l'invention, ledit champ magnétique est variable sur la longueur L et a, typiquement, la forme d'une courbe en cloche symétrique par rapport à l'axe transversal médian positionné à L/2, comme représenté à la figure 2c. L'intérêt d'utiliser un champ magnétique variable sur la longueur L, c'est à dire selon la direction de déplacement de l'emballage à identifier, est d'obtenir non seulement une valeur de déphasage maximum (DP, dp, ...), mais aussi une courbe de déphasage en fonction de la distance parcourue par ledit emballage, sur la distance L, durant tout le temps où ledit emballage passe en regard desdits moyens d'émission et de réception. Les figures 5a à 5d sont une illustration des courbes de déphasage obtenues avec différents emballages, à l'aide d'un dispositif muni de deux capteurs, la partie gauche de la courbe, par rapport à la ligne en pointillé correspondant à L/2, donnant le déphasage DP obtenu avec un premier capteur (50), la partie droite de la courbe donnant le déphasage dp obtenu avec un second capteur (51).
Les courbes obtenues peuvent apporter. outre la valeur du déphasage maximum, qui serait par ailleurs obtenue aussi avec un champ magnétique constant sur la longueur L, un complément d'information par la forme de la courbe elle-même, et donc ainsi une augmentation du pouvoir de séparation ou de discrimination entre emballages. Ainsi, par exemple, on peut noter que les emballages Eᵢ (figure 5a) et Eₗ (figure 5d) présentent des déphasages voisins (respectivement 120° et 130°), alors que la forme des courbes correspondantes Cᵢ et Cₗ est assez différente, forme qui pourrait être analysée en détail pour introduire des critères complémentaires d'identification d'emballages.
Il est donc souhaitable, que le dispositif selon l'invention présente un champ magnétique variable sur la longueur L, et que ce dispositif comprenne un moyen de mesure et d'enregistrement (6) de la courbe de déphasage mesurée Cₘ (11) en fonction de la position de l'emballage Eₓ sur la distance comprise entre 0 et L, et cela pour chaque capteur de sensibilité différente (50,51,52,53), si plus d'un capteur (5) est utilisé sur la distance L.
Simultanément, et pour utiliser l'information fournie par les courbes de déphasage, ledit moyen d'enregistrement et de stockage (6) du dispositif doit comprendre aussi l'information relative à une table de correspondance entre les courbes Cᵢ et les différents emballages Eᵢ correspondants, et un moyen de comparaison de la courbe Cₘ aux courbes Cᵢ, éventuellement à l'aide d'un ou plusieurs critères pertinents, de manière à identifier plus finement ou avec plus de certitude ledit emballage E, comme étant l'emballage Eⱼ.
Par exemple, si l'on considère les courbes de déphasage dp des emballages Eᵢ (figure 5a) et Eₗ (figure 5d), un critère significatif pourrait être le fait que la courbe dpₗ (contrairement à la courbe dpᵢ) présente deux maxima, le second étant plus grand (en valeur absolue) que le premier, ce qui n'est pas le cas pour la courbe dpᵢ.
C'est à partir de l'examen comparatif des courbes Cᵢ et emballages Eᵢ de la table de correspondance (7) que des critères pertinents peuvent être établis et pris comme moyen de comparaison (8) permettant d'identifier un emballage Eₓ à partir de sa « signature », la courbe Cₘ.
Compte tenu d'une part de la nécessité, normale dans tout processus industriel soumis à des impératifs de constance de qualité, de vérifier périodiquement le bon fonctionnement du dispositif d'identification et de tri, et compte tenu de l'évolution permanente des emballages, on étalonne ledit dispositif (1), et on établit lesdites tables de correspondance figurant dans les moyens (7) d'enregistrement et de stockage de l'information ou « signature » (Cᵢ, DPᵢ, dpᵢ ...) relative à un emballage donné Eᵢ, par passage en regard desdits moyens d'émission (4) et de réception (5) dudit dispositif (1), soit d'emballages-tests ou de plaques métalliques d'un métal connu et à épaisseur connue, pour vérifier le bon fonctionnement dudit dispositif, soit d'emballages nouveaux ayant une nature et une épaisseur de métal déterminées, pour enrichir ladite table de correspondance. Dans les deux cas, l'opérateur doit alors spécifier au moyens informatiques (12) qu'il s'agit, selon le cas, d'une opération d'étalonnage ou qu'il s'agit d'introduire dans la table de correspondance un emballage nouveau en vue de sa détection ultérieure.

Le dispositif selon l'invention peut comprendre en outre des moyens de détection du passage (13) de chaque emballage (2) sur ladite voie (3), de manière à commander en temps utile, compte tenu de la vitesse de défilement dudit emballage et de la distance séparant lesdits moyens de détection (13) de l'extrémité de ladite voie (3), un actionneur (90) dudit moyen de tri (9) quand ledit emballage arrive à l'extrémité de ladite voie (3). On pourrait aussi détecter la passage des emballages à partir de la mesure du déphasage. Ces moyens de détection (13), représentés seulement sur la figure 1a par souci de simplification, sont commandés par les moyens informatiques (12), suite à l'identification de l'emballage Eₓ comme étant un emballage Eᵢ devant être trié et classé selon une des voies alternatives disponibles à l'extrémité de ladite voie (3). Sur la figure 1a, on n'a représenté que 3 possibilités, mais l'invention n'est pas limitée à ce nombre.

Comme cela a déjà été mentionné, le choix de la fréquence du champ magnétique dépend notamment de la nature de métal et de la plage d'épaisseur visée. Comme dans le cas des récepteurs de sensibilité différente, il peut être avantageux pour améliorer encore la sensibilité dudit dispositif que ledit moyen d'émission (4) soit multifréquences, ledit déphasage du signal reçu étant mesuré pour chaque fréquence.

Selon une variante de dispositif selon l'invention, ledit moyen d'émission (4) et ledit moyen de réception (5), uniques sur la largeur l, présentant une activité, de préférence, identique sur toute la largeur « l » de ladite voie, peut être remplacé par plusieurs moyens d'émission et de réception dans la largeur « l » de ladite voie, moyens de préférence identiques et plus petits que ledit moyen d'émission et ledit moyen de réception unique sur la largeur l.

Selon l'invention la détection et l'identification des emballages, basée sur la mesure du déphasage et/ou la variation du déphasage du champ magnétique induit quand l'emballage parcourt la distance L, peut être complétée par la mesure de l'amplitude et/ou par l'évolution de l'amplitude du champ induit quand l'emballage parcourt cette même distance L, de manière à obtenir ainsi une courbe Cⱼ' d'amplitude maximum Aⱼ pour un emballage Eⱼ, ces courbes C' et les valeurs A d'amplitude maximum étant aussi stockées dans des registres (7) pour servir comme moyen complémentaire d'identification, après adaptation dudit moyen de comparaison (8) par introduction de critères pertinents complémentaires.

De plus, le dispositif selon l'invention permet, par adaptation de ladite fréquence prédéterminée et de l'analyse dudit déphasage, l'identification et la discrimination des différents métaux selon leur nature (Al, Cu, Sn, Pb, Fe, Zn, etc...), et éventuellement aussi selon leur épaisseur, métaux rencontrés notamment dans des emballage et/ou des déchets.

Un autre objet de l'invention est constitué par une méthode de détection et d'identification au défilé d'emballages comprenant un métal et circulant selon une voie prédéterminée, comprenant l'émission d'un signal dit « émis » constitué par un champ magnétique d'une fréquence prédéterminée, et la réception correspondante d'un signal dit « reçu », de même fréquence, constitué par le champ magnétique induit dans ledit métal lors dudit défilé devant lesdits moyens, caractérisé en ce qu'elle comprend :
a) la mesure et l'enregistrement d'une différence de phase ou déphasage DPₘ entre ledit signal émis et ledit signal reçu au passage d'un emballage Eₓ,
b) l'enregistrement et le stockage d'une information relative à une table de corrélation ou de correspondance entre la nature dudit emballage Eᵢ et ledit déphasage DPᵢ correspondant,
c) la comparaison dudit déphasage mesuré DPₘ aux valeurs de déphasage contenues dans ladite table de correspondance entre le déphasage DPᵢ et l'emballage Eᵢ, et ainsi un moyen d'identification dudit emballage Eₓ comme étant un emballage Eⱼ,
d) le tri dudit emballage Eⱼ précédemment identifié.
Ce qui a été dit à propos du dispositif s'applique aussi à la méthode, mais par souci d'économie des moyens, ceci ne sera pas repris à propos de la méthode selon l'invention.

### EXEMPLES DE REALISATION

On a réalisé, à partir de moyens d'émission (4) et de réception (5) du commerce (approvisionnés auprès de la Société française DELACHAUX) fonctionnant avec une bobine émettrice/réceptrice accordée sur une fréquence de 16 kHz, les dispositifs schématisés aux figures 1a,1b, 1c, 2a à 2c.
Dans les dispositifs des essais, la largeur « l » vaut 1000 mm, et la longueur « L » vaut 400 mm.
On a utilisé comme voie (3), une bande de convoyage (30) avançant à 10 m/s, ce qui, compte tenu de la longueur L de 400 mm, correspond à un temps de mesure de 0,04 s. On a utilisé deux capteurs (50, 51) de sensibilité différente, chacun sur une demi-longueur de 200 mm.
La phase de chaque bobine des capteurs (50,51) a été calée à l'aide d'une plaque de cuivre
Par comparaison des signaux émis et reçus, on a réalisé la mesure du déphasage en continu durant le passage d'un emballage sur toute la longueur «L», à l'aide de méthodes et de moyens connus en eux-mêmes. Ces mesures de déphasage se présentent sous forme de signal analogique comme illustré aux figures 3a à 3d (mesures instantanées).
A ces mesures de déphasage sont associés des moyens de conversion de signaux analogiques en signaux digitaux, ainsi que les moyens informatiques standards (registres
et mémoires) de stockage de ces données numérisées qui permettent notamment de produire des courbes de déphasage comme représenté aux figures 5a à 5d.
Pour des raisons de clarté et par souci de simplification, la mesure du déphasage d'un emballage à identifier et son enregistrement ont été regroupés sous la référence 6.

Avec ce dispositif décrit précédemment, on a crée dans un moyen d'enregistrement ou registre (7) contenant une table de correspondance, c'est à dire des courbes de déphasage C_{i à l} en correspondance avec des emballages identifiés E_{i à l}, et cela pour chacun des capteurs (50, 51).
Dans une version simplifiée, le registre ou la table de correspondance (7) peut ne contenir que la valeur maximum du déphasage, notée DP pour le premier capteur (50) et dp pour le second capteur (51).
Compte tenu de la diversité des emballages, la table de correspondance (7) peut contenir un grand nombre de données, et par exemple, différentes données pour une même famille ou un même type d'emballage, comme représenté aux figures 6 et 7, où, par exemple, la classe d'emballages Eᵢ qui correspond aux aérosols en aluminium comprend 9 emballages différents.
Il faut noter que les valeurs numériques de déphasage contenues dans cette table de correspondance peuvent dépendre, du moins partiellement, des conditions de mesure, notamment de la distance entre emballage à identifier (2) et moyens d'émission (4) et de réception (5), comme déjà mentionné et comme cela apparaît par comparaison des figures 6 et 7.

On a ensuite établi un moyen de comparaison (8) entre tout déphasage mesuré DPₘ et dpₘ d'un emballage Eₓ à identifier avec ladite table de correspondance.
Par moyen de comparaison, on entend tout critère ou combinaison de critères pertinents permettant l'identification des emballages.
Par exemple, dans le cas de la figure 6 où la mesure de déphasage est réalisée sans moyen (10) assurant une mesure à distance constante, il est aisé de définir des domaines dans le plan d'axes DP et dp où, dans la grande majorité des cas, la population sera homogène. Ainsi, sur la figure 6, on a représenté deux domaines Dₖ et Dₗ correspondants aux emballages Eₖ et Eₗ et définis par un contour spécifique. On peut observer que, si le domaine Dₗ est homogène, par contre, le domaine Dₖ a une moindre probabilité d'être homogène, sur la base de ce critère, et que l'on pourra trouver parfois un emballage Eⱼ répondant au critère des emballages Eₖ du domaine Dₖ.
Il convient de noter que cette situation peut provenir, outre d'une différence de distance entre emballage et moyens d'émission (4) et de réception (5), du fait que le même métal peut avoir été utilisé avec la même épaisseur dans deux emballages différents, et dès lors il est sans inconvénient d'avoir, dans l'exemple cité, une faible quantité d'emballages Eⱼ dans un lot d'emballages Eₖ ou l'inverse éventuellement.
S'il était absolument nécessaire d'éviter ce type de situation, par exemple parce que trier par type d'emballage peut revenir aussi implicitement à trier le métal par type d'alliage, les mêmes alliages n'étant pas utilisés uniformément pour tous les types d'emballages, il faudrait alors, soit trouver un critère de tri plus discriminant, notamment en se basant sur les courbes Cⱼ et Cₖ , soit utiliser le moyen (10) assurant le défilé à distance constante des emballages à identifier. En effet, dans ce cas, illustré à la figure 7, on peut voir qu'il est possible de définir des domaines totalement homogènes, tel qu'illustré par le domaine Dₖ.

### AVANTAGES DE L'INVENTION

Parmi tous les avantages de l'invention, on peut citer :
- il y a peu de contraintes sur l'emballage ou déchet d'emballage lui-même, qui peut être de forme quelconque, être animé d'un mouvement propre (cas des emballages cylindriques roulant sur un plan incliné),
- la position de l'emballage peut varier en altitude (par rapport au plan de référence pris comme étant, par exemple, le plan de la voie (3)), de quelques cm,
- l'emballage ou le déchet peut être lui-même enfermé dans un sac en matière non métallique, ou circuler dans une gaine non métallique, de sorte que tout contact peut être évité entre le dispositif selon l'invention et les emballages à identifier et trier,
- il est possible de mettre en oeuvre une discrimination plus ou moins poussée entre emballages, en fonction du niveau d'exigences requis, et cela, notamment par simple modification des critères au sein dudit moyen de comparaison (8),
- Il est possible d'utiliser le dispositif selon l'invention pour identifier un flux de déchets d'emballage et évaluer ainsi sa composition (types d'emballages), la quantité et la nature des métaux, notamment aluminium et fer, qu'il contient,
- ledit dispositif permet à la fois d'identifier, de discriminer, de comptabiliser et de trier divers types d'emballages et de matériaux (boîtes aluminium, capsules en étain, tubes en acier inox, fils en cuivre, etc...)
- l'identification est très rapide, typiquement inférieure au dixième de seconde, ce qui permet des vitesses de passage très grandes, au moins égales à 10m/s.
- le coût dudit dispositif est relativement faible, dans le mesure où il ne requiert pas de composants spécifiques pour sa réalisation,
- ledit dispositif peut être implanté facilement sur tout flux d'emballages ou de déchets d'emballages, ayant de préférence une épaisseur de moins de 6 cm.
- ledit dispositif peut facilement s'adapter à toutes les évolutions des emballages.

En référence à la figure 9, le circuit électronique CE comporte un générateur G destiné à envoyer un premier signal de mesure E1 sinusoïdal à un pont de mesure PM, dans les branches desquelles sont insérées des inpédances Z1, Z2, Z3, et une bobine 100 émettrice/réceptrice, cette dernière constituant les moyens d'émission 4 et de réception 5 du dispositif de la figure 1. La sortie du pont de mesure PM est connectée à un amplificateur différentiel 102, lequel est raccordé à un circuit discriminateur 104 par l'intermédiaire d'un circuit adaptateur d'impédance 106.

Le circuit discriminateur 104 reçoit un deuxième signal de synchronisation E2 périodique de forme carrée issu du générateur G, et est agencé pour délivrer deux signaux de sortie S1 et S2 représentatifs de la mesure du déphasage pour des métaux non-ferreux, et des métaux ferreux. Un circuit de traitement 108 numérique reçoit les deux signaux S1, S2 conjointement avec un troisième signal S3 de sortie représentatif de l'amplitude du signal aux bornes de la bobine 100. Le signal S3 est délivré par un circuit de mise en forme 110 connecté à la sortie du circuit adapteur d'impédance 106. Le circuit de traitement 108 constitue les moyens informatiques 12 et les moyens d'enregistrement 7 et de stockage 6 du dispositif de la figure 1, et permet d'identifier avec précision les types d'emballage à trier.

## Revendications

1. Dispositif de détection et d'identification (1) au défilé d'emballages ou de déchets (2) comprenant au moins une partie métallique et circulant selon une voie déterminée (3), comprenant :
- un moyen de génération ou d'émission (4) d'un signal émis constitué par un champ magnétique d'une fréquence prédéterminée,
- un moyen correspondant de réception et d'analyse complexe (5) d'un signal reçu, de même fréquence, constitué par le champ magnétique induit et modifié dans ledit métal lors dudit défilé des emballages,
- et un moyen de mesure et d'enregistrement (6) d'une différence de phase ou déphasage DPm entre ledit signal émis et ledit signal reçu au passage d'un emballage Ex,
caractérisé en ce qu'il comporte de plus :
- un moyen d'enregistrement et de stockage (7) d'une information relative à une table de corrélation ou de correspondance entre la nature dudit emballage Ei et ledit déphasage DPi correspondant,
- un moyen de comparaison (8) dudit déphasage mesuré DPm aux valeurs de déphasage contenues dans ladite table de correspondance entre le déphasage DPi et l'emballage Ei, et ainsi un moyen d'identification dudit emballage Ex comme étant un emballage Ej,
- un moyen de tri (9) dudit emballage Ej précédemment identifié, la nature dudit emballage étant définie par la nature et par l'épaisseur dudit métal,
- et un moyen de mesure de l'amplitude du champ induit quand l'emballage parcourt une distance L, de manière à obtenir une courbe Cj' d'amplitude maximum Aj pour un emballage Ej, ces courbes et les valeurs d'amplitude maximum étant aussi stockées dans des registres (7) pour servir comme moyen complémentaire d'identification après adaptation dudit moyen (8) de comparaison.

2. Dispositif selon la revendication 1, caractérisé en ce que ladite fréquence prédéterminée est, de préférence, la fréquence à laquelle la variation dudit déphasage est la plus grande pour une plage donnée d'épaisseurs de métal.

3. Dispositif selon la revendication 2, caractérisé en ce que pour l'aluminium, et pour une plage d'épaisseurs variant de 5 à 350 µm, ladite fréquence est, de préférence, de 16 kHz +/- 2 kHz.

4. Dispositif selon l'une quelconque des revendications 1 à 3, caractérisé en ce que ledit moyen d'émission (4) et ledit moyen de réception (5) présentent une activité, de préférence, identique sur toute la largeur "I" de ladite voie (3), de manière à ce que ledit signal émis et ledit signal reçu soient indépendants de la position transversale dudit emballage (2) sur ladite voie (3).

5. Dispositif selon la revendication 4, caractérisé en ce que ladite largeur "I" est, de préférence, comprise entre 0,1 et 2 m, et que ledit moyen d'émission (4) forme un champ magnétique, constant ou variable dans le sens longitudinal sur une longueur "L" le long de ladite voie (3), ladite longueur "L" étant choisie en relation avec la vitesse de défilement desdits emballages (2), de manière à ce que le temps de séjour desdits emballages (2) en regard des moyens d'émission (4) et de réception (5) du dispositif (1) soit inférieur à la seconde.

6. Dispositif selon la revendication 5, caractérisé en ce que pour une dite vitesse de défilement qui peut être comprise entre 1 et 15 m/s, ladite longueur "L" peut être comprise entre 30 et 450 mm.

7. Dispositif selon une quelconque des revendications 1 à 6, caractérisé en ce que ledit moyen d'émission (4) et ledit moyen correspondant de réception (5) sont situés d'un même côté de ladite voie (3) et fonctionnent en réflexion.

8. Dispositif selon une quelconque des revendications 1 à 6, caractérisé en ce que ledit moyen d'émission (4) et ledit moyen correspondant de réception (5) sont situés de part et d'autre de ladite voie (3) et fonctionnent en transmission.

9. Dispositif selon une quelconque des revendications 1 à 8, caractérisé en ce que ladite voie (3) est une bande de convoyage (30), de préférence non armée, un moyen (10) assurant ledit défilé d'emballages à une distance des moyens d'émission et de réception qui soit constante et inférieure à une distance prédéterminée, de préférence inférieure à 6 cm.

10. Dispositif selon une quelconque des revendications 1 à 9, caractérisé en ce que ledit moyen de réception comprend (5) comprend plusieurs capteurs (50, 51, 52, 53) disposés à la suite sur toute la longueur L, et/ou de part et d'autre de ladite voie (3).

11. Dispositif selon la revendication 10, caractérisé en ce que ledit moyen de réception comprend deux capteurs de sensibilités différentes (50, 51), (52, 53), chacun s'étendant, de préférence, sur une longueur égale à L/2.

12. Dispositif selon une quelconque des revendications 5 à 11, caractérisé en ce que ledit champ magnétique est variable sur la longueur L et a la forme d'une courbe en cloche symétrique par rapport à l'axe transversal médian positionné à L/2.

13. Dispositif selon une quelconque des revendications 5 à 12, caractérisé en ce que le champ magnétique est variable sur la longueur L, et coopère avec un moyen de mesure et d'enregistrement (6) de la courbe de déphasage mesurée Cm (11) en fonction de la position de l'emballage Ex sur la distance comprise entre 0 et L, et cela pour chaque capteur de sensibilité différente (50, 51, 52, 53) si plus d'un capteur (5) est utilisé sur la distance L, et que ledit moyen d'enregistrement et de stockage (6) comprend aussi l'information relative à une table de correspondance entre les courbes Ci et les différents emballages Ei correspondants, et un moyen de comparaison de la courbe Cm aux courbes Ci, de manière à identifier plus finement ou avec plus de certitude ledit emballage Ex comme étant l'emballage Ej.

14. Dispositif selon une quelconque des revendications 1 à 13, caractérisé en ce que l'étalonnage dudit dispositif (1), ainsi que lesdites tables de correspondance sont établies par passage en regard desdits moyens d'émission (4) et de réception (5) dudit dispositif (1), d'emballages - tests ayant une nature et une épaisseur de métal déterminées.

15. Dispositif selon une quelconque des revendications 1 à 14 comprenant des moyens de détection du passage (13) de chaque emballage (2) sur ladite voie (3), de manière à commander en temps utile, compte tenu de la vitesse de défilement dudit emballage et de la distance séparant lesdits moyens de détection (13) de l'extrémité de ladite voie (3), un actionneur (90) dudit moyen de tri (9) quand ledit emballage arrive à l'extrémité de ladite voie (3).

16. Dispositif selon une quelconque des revendications 1 à 15, caractérisé en ce que ledit moyen d'émission (4) est multifréquences, ledit déphasage du signal reçu étant mesuré pour chaque fréquence.

17. Dispositif selon une quelconque des revendications 4 à 16 dans lequel ledit moyen de réception présentant une activité, de préférence, identique sur toute la largeur "I" de ladite voie, est remplacée par plusieurs dits moyens d'émission et de réception dans la largeur "l" de ladite voie, de préférence identiques et plus petits que ledit moyen d'émission et ledit moyen de réception.

18. Dispositif selon une quelconque des revendications 1 à 17, caractérisé en ce que ladite fréquence et l'analyse dudit déphasage sont adaptés à l'identification et à la discrimination de différents métaux, notamment Al, Cu, Sn, Pb, Fe, Zn.

19. Méthode de détection et d'identification au défilé d'emballages comprenant un métal, et circulant selon une voie prédéterminée, comprenant l'émission d'un signal émis constitué par un champ magnétique d'une fréquence prédéterminée, la réception correspondante d'un signal reçu de même fréquence constitué par le champ magnétique induit dans ledit métal lors du défilé des emballages, et la mesure et l'enregistrement d'une différence de phase ou déphasage DPm entre ledit signal émis et ledit signal reçu au passage d'un emballage Ex, caractérisée en ce qu'elle comprend les étapes suivantes :
- l'enregistrement et le stockage d'une information relative à une table de corrélation ou de correspondance entre la nature dudit emballage Ei et ledit déphasage DPi correspondant,
- la comparaison dudit déphasage mesuré DPm aux valeurs de déphasage contenues dans ladite table de correspondance entre le déphasage DPi et l'emballage Ei, et ainsi un moyen d'identification dudit emballage Ex, comme étant un emballage Ej,
- le tri dudit emballage Ej précédemment identifié,
- et la mesure de l'amplitude du champ induit quand l'emballage parcourt une distance L, de manière à obtenir une courbe Cj' d'amplitude maximum Aj pour un emballage Ej, ces courbes et les valeurs d'amplitude maximum étant aussi stockées dans des registres (7) pour servir comme moyen complémentaire d'identification après adaptation dudit moyen (8) de comparaison.

20. Dispositif selon une quelconque des revendications 1 à 18, caractérisé en ce qu'il comporte :
- un générateur (G) destiné à envoyer un premier signal de mesure (E1) à un pont de mesure (PM) renfermant une bobine (100) émettrice/réceptrice sensible audit déphasage et à l'amplitude du signal représentatif du champ induit,
- un amplificateur différentiel (102) connecté à la sortie du pont de mesure (PM),
- et un circuit discriminateur (104) recevant le signal de sortie de l'amplificateur différentiel (102) , et un deuxième signal de synchronisation (E2) issu du générateur (G) pour délivrer deux signaux de sortie (S1 et S2) représentatifs de la mesure du déphasage pour des métaux non ferreux et des métaux ferreux.

21. Dispositif selon la revendication 20, caractérisé en ce qu'il comporte :
- un circuit adaptateur d'impédance (106) connecté entre la sortie de l'amplificateur différentiel (102) et le circuit discriminateur (104),
- un circuit de mise en forme (110) branché à la sortie du circuit adaptateur (106) pour engendrer un troisième signal de sortie (S3) représentatif de l'amplitude du signal aux bornes de la bobine (100),
- et un circuit de traitement (108) recevant les trois signaux de sortie (S1, S2, S3) pour identifier les types d'emballage à trier.
